(19) Europäisches Patentamt

European Patent Office

Office européen des brevets

(11) **EP 4 717 471 A1**

(12) **EUROPEAN PATENT APPLICATION**

(43) Date of publication:
**01.04.2026 Bulletin 2026/14**

(21) Application number: 25202563.0

(22) Date of filing: **16.09.2025**

(51) International Patent Classification (IPC):
**B60C 1/00** $^{(2006.01)}$     **B60C 11/00** $^{(2006.01)}$
**B60C 11/03** $^{(2006.01)}$     **C08L 9/06** $^{(2006.01)}$

(52) Cooperative Patent Classification (CPC):
(C-Sets available)
**B60C 1/0016; B60C 11/0008; B60C 11/0306;
C08C 19/22; C08C 19/25; C08C 19/44;**
B60C 2011/0025; B60C 2011/0341;
B60C 2011/0383        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024 JP 2024171191**

(71) Applicant: **Sumitomo Rubber Industries, Ltd.
Kobe-shi, Hyogo 651-0072 (JP)**

(72) Inventors:
• **TAKATA, Yoshiki
Kobe-shi, 651-0072 (JP)**
• **TOMOKI, Yonezu
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **TIRE**

(57) Provided is a tire, wherein a tread part comprises two or more ribs and two or more lateral grooves, wherein a width direction component of each lateral groove is at least 20% of a rib width, wherein at least some circumferential components of adjacent grooves overlap, wherein the tread part is composed of a rubber composition comprising a rubber component and a plasticizing agent, wherein the rubber component comprises one or more selected from the group consisting of styrene-butadiene rubber and isoprene-based rubber, wherein the plasticizing agent comprises a copolymer resin of styrene and cyclopentadiene, and wherein H/S is less than 5.0, where H represents a groove depth, in mm, at a deepest part of the lateral grooves, and S represents a total styrene amount, in % by mass, in the rubber composition.

**(Cont. next page)**

EP 4 717 471 A1

(52) Cooperative Patent Classification (CPC): (Cont.)

C-Sets
**C08F 236/10, C08F 4/48;**
**C08L 15/00, C08L 7/00, C08L 45/00, C08L 91/00,**
**C08L 15/00, C08L 9/00, C08L 91/06, C08L 45/00,**
**C08K 3/04, C08K 3/36, C08K 5/548, C08K 5/09,**
**C08K 3/22, C08K 5/18, C08K 3/06, C08K 5/47,**
**C08K 5/31;**
C08F 236/06, C08F 212/08

**Description**

TECHNICAL FIELD

The present invention relates to a tire.

BACKGROUND OF THE INVENTION

Recently, an improvement in wet grip performance of a tire has been desired. For example, JP 2020-41035 A describes that a tire rubber composition comprising a predetermined amount of a certain conjugated diene-based rubber and a predetermined amount of a conjugated diene-based polymer as a rubber component and further comprising a predetermined amount of a certain silica and a predetermined amount of a certain tetrazine compound can improve wet grip performance.

SUMMARY OF THE INVENTION

However, in JP 2020-41035 A, any performances other than wet grip performance are not considered. An improvement of fuel efficiency by a reduction in rolling resistance is demanded for a tire. Moreover, when a vehicle such as an SUV or the like runs on a rough road, noise easily occurs in a vehicle due to a sound caused by splashes of sand and the like, and therefore quietness performance of a tire is also demanded.
It is an object of the present invention to provide a tire that improves in overall performance of fuel efficiency, wet grip performance, and quietness performance.
The present invention relates to the following tire:

a tire comprising a tread part,
the tread part comprising two or more ribs partitioned off by one or more circumferential grooves,
wherein at least one rib of the ribs is provided with two or more lateral grooves,
wherein a length of a width direction component of each of the two or more lateral grooves is 20% or more of a width of the rib,
wherein, in the two or more lateral grooves, at least some of circumferential direction components of adjacent lateral grooves overlap each other,
wherein the tread part is composed of a rubber composition comprising a rubber component and a plasticizing agent,
wherein the rubber component comprises one or more selected from the group consisting of a styrene-butadiene rubber and an isoprene-based rubber,
wherein the plasticizing agent comprises a copolymer resin comprising styrene and cyclopentadiene as monomer components, and
wherein H/S is less than 5.0,
where H represents a groove depth, in mm, at a deepest part of the two or more lateral grooves, and S represents a total styrene amount, in % by mass, in the rubber composition.

According to the present invention, a tire can be provided which improves in overall performance of fuel efficiency, wet grip performance, and quietness performance.

BRIEF DESCRIPTION OF THE DRAWINGS

FIG. 1 is a view schematically showing a tread pattern of a tire relating to one embodiment of the present invention.
FIG. 2 is a cross-sectional view along the X-X line shown in FIG. 1.

DETAILED DESCRIPTION

A tire that is one embodiment of the present invention will be described below. The tire of the present embodiment is a tire comprising a tread part, the tread part comprising two or more ribs partitioned off by one or more circumferential grooves, wherein at least one rib of the ribs is provided with two or more lateral grooves, wherein a length of a width direction component of each of the two or more lateral grooves is 20% or more of a width of the rib, wherein, in the two or more lateral grooves, at least some of circumferential direction components of adjacent lateral grooves overlap each other, wherein the tread part is composed of a rubber composition comprising a rubber component and a plasticizing agent,

wherein the rubber component comprises one or more selected from the group consisting of a styrene-butadiene rubber and an isoprene-based rubber, wherein the plasticizing agent comprises a copolymer resin comprising styrene and cyclopentadiene as monomer components, and wherein H/S is less than 5.0,

where H represents a groove depth, in mm, at a deepest part of the two or more lateral grooves, and S represents a total styrene amount, in % by mass, in the rubber composition.

Although it is not intended to be bound by a theory, in the present invention, the following can be considered as a reason why overall performance of fuel efficiency, wet grip performance, and quietness performance is improved.

That is, (1) when a tread part comprises two or more ribs partitioned off by one or more circumferential grooves, at least one rib of the ribs is provided with two or more lateral grooves, and a length of a width direction component of each of the two or more lateral grooves is 20% or more of a width of the rib, water on a road surface can be removed, which is considered to contribute to an improvement of wet grip performance. (2) When at least some of circumferential direction components of adjacent lateral grooves overlap each other, a pitch noise is reduced, which is considered to contribute to an improvement of quietness performance.

(3) A copolymer resin comprising styrene and cyclopentadiene as monomer components is bulky. Therefore, when a rubber composition comprises this copolymer resin, the rubber composition becomes one that is given flexibility without impairing a reinforcing effect, which is considered to contribute to maintenance of wet grip performance of a tire. Moreover, the copolymer resin is less likely to elute from a rubber component because its cyclopentadiene and/or dicyclopentadiene part (DCPD part) has a high compatibility with a styrene-butadiene rubber and an isoprene-based rubber, and a 30°C tan $\delta$ of the rubber composition is reduced, which are considered to contribute to achievement of both fuel efficiency and wet grip performance. Moreover, since the styrene component of the copolymer resin softens the resin during running of a vehicle, noise occurring during contact between a tire and a ground can be reduced, which is considered to contribute to an improvement of quietness performance. Additionally, (4) when H/S is less than 5.0, fuel efficiency is improved without impairing wet grip performance and quietness performance, so that it is considered that overall performance of fuel efficiency, wet grip performance, and quietness performance is improved. Moreover, it is considered that, with cooperation of the above-described (1) to (4), it is considered that overall performance of fuel efficiency, wet grip performance, and quietness performance is improved.

The tread part preferably comprises two or more circumferential grooves.

Since it becomes easier to remove water on a road surface due to the two or more circumferential grooves, it is considered that wet grip performance is further improved.

It is preferable that the tread part comprises five ribs partitioned off by four circumferential grooves and that at least some of the circumferential direction components of the adjacent lateral grooves overlap each other in one of the five ribs.

The rubber composition preferably comprises 50 parts by mass or more of silica based on 100 parts by mass of the rubber component.

When the rubber composition comprises 50 parts by mass or more of silica, the followability of a tread surface to a road surface is improved by interaction between a silanol group of silica and water on the road surface, so that it is considered that wet grip performance is further improved.

When 0°C tan $\delta$ represents a tan $\delta$ at 0° of the rubber composition and 0°C E* represents a complex elastic modulus, in MPa, at 0°C of the rubber composition, 0°C tan $\delta$/0°C E*$\times$1000 is preferably greater than 65.

When 0°C tan $\delta$/0°C E*$\times$1000 is within the above-described range, it is considered that the effects of the present invention are further improved.

When 30°C tan $\delta$ represents a tan $\delta$ at 30° of the rubber composition and 30°C E* represents a complex elastic modulus, in MPa, at 30°C of the rubber composition, 30°C tan $\delta$$\times$30°C E*$\times$100 is preferably less than 60.

When 30°C tan $\delta$$\times$30°C E*$\times$100 is within the above-described range, it is considered that the effects of the present invention are further improved.

When 30°C E* represents a complex elastic modulus, in MPa, at 30°C of the rubber composition, 30°C E* /H is preferably 0.50 or less.

When 30°C E*/H is within the above-described range, it is considered that the effects of the present invention are further improved.

A total length of overlapping parts of the circumferential direction components of the two or more lateral grooves relative to the tire entire circumference is preferably 5.0% or more.

When the total length of the overlapping parts of the circumferential direction components of the lateral grooves relative to the tire entire circumference is within the above-described range, it is considered that quietness performance is further improved.

The tire relating to the present embodiment is preferably for an SUV.

[Definition]

A "standardized state" is a state in which the tire is rim-assembled to a standardized rim, filled with air at a standardized internal pressure, and applied with no load. Unless otherwise noted, a tire in a standardized state is used.

A "dimension of each part of a tire" is a value specified in a standardized state for one appearing on the outer surface of the tire, unless otherwise specified, while it is a value specified, for example, in a condition where the tire is cut on a plane including a tire rotation axis and the cut tire piece is held with a rim width of a standardized rim, for one present inside the tire or on a tire cutting surface.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load, in kg" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by a calculation is defined as a standardized load.

A "maximum load capacity $W_L$, in kg" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load described above.

$$W_L = 0.000011 \times V + 175$$

$$V = \{(Dt/2)^2 - (Dt/2 - Ht)^2\} \times \pi \times Wt$$

A "tread part" is a member including a part forming a ground-contacting surface of a tire and is a member arranged on an outer side in a tire radial direction with respect to members forming a tire skeleton with steel or a textile material, such as a belt layer, a belt reinforcement layer, a carcass layer, and the like, on a cross section taken along the tire radial direction, when the tire comprises these members.

A "total styrene amount S in a rubber composition" is a total styrene amount, in % by mass, in the rubber composition based on 100% by mass of a rubber component and is a total amount obtained by summing up a content of a styrene part contained in the rubber component and contents of styrene parts contained in compounding agents other than the rubber component. The styrene parts are not particularly limited as long as they are groups each having a styrene structure, and examples of the styrene parts include, for example, styrene, $\alpha$-methylstyrene, vinyltoluene, chlorostyrene, and the like.

That is, first of all, for each rubber component, a value obtained by multiplying a content, in % by mass, of a styrene part of each rubber component by a mass fraction in the rubber component is calculated, and a total sum value, in % by mass, is calculated by adding up these values. Next, for styrene part-containing compounding agents other than the rubber component that are contained in the rubber composition, a value obtained by multiplying a content, in % by mass, of a styrene part of each styrene part-containing compounding agent by a mass fraction based on 100 parts by mass of the rubber component is calculated, and a total sum value, in % by mass, is calculated by adding up them. A value obtained by summing up these total sum values is used as a total styrene amount S, in % by mass. Therefore, S is calculated by {Σ (a content (% by mass) of a styrene part of each styrene part-containing rubber × a content (% by mass) of each styrene part-containing rubber in a rubber component / 100) + Σ (a content (% by mass) of a styrene part of each styrene part-containing compounding agent other than the rubber component × a compounding amount (parts by mass) of each styrene part-containing compounding agent based on 100 parts by mass of the rubber component / 100)}. Besides, in the present specification, in a case where the above-described "styrene part" is styrene (for example, in a case where the above-described styrene part-containing rubber is a styrene-butadiene rubber), the above-described "content of styrene part" may be written as a "styrene content".

For example, when the rubber component consists of 30% by mass of a first SBR (styrene content: 25% by mass), 60% by mass of a second SBR (styrene content: 27.5% by mass), and 10% by mass of a BR, and the rubber composition further comprises, in addition to the rubber component, 20 parts by mass of a first resin component having a styrene part (styrene content: 5% by mass) based on 100 parts by mass of the rubber component and 10 parts by mass of a second resin component having a styrene part (styrene content: 1% by mass) based on 100 parts by mass of the rubber component, the total styrene amount S in the rubber composition based on 100% by mass of the rubber component is 25.1% by mass = {(25×30/100+27.5×60/100+0×10/100+(5×20/100+1×10/100)}.

In the present specification, a "circumferential groove" refers to a groove extending continuously in a tire circumferential direction. The circumferential groove may extend linearly along the circumferential direction or may extend in a wavy, sinusoidal, or zigzag shape.

A "land part" is a part of a tread at which a tire touches the ground when the tire is pressed against the ground, which is a part of the tread constituting the above-described effective ground-contacting region.

A "rib" is a land part partitioned off by two circumferential grooves or a land part partitioned off by a circumferential groove and a tire ground-contacting end. A groove depth of a groove formed on such a land part is shallower than a groove depth of the circumferential grooves at a deepest part.

In the present specification, a "lateral groove" is a groove having a groove width that is 20% or more of a lateral width of a rib (length in a tire axial direction). Examples of the lateral groove also include a sipe.

A "groove width" means the maximum value of a distance between groove ends on a tread surface in a direction perpendicular to an extending direction of a groove.

A "groove depth" refers to a distance between a straight line obtained by connecting ends of a groove on a tread surface and a lowest part of the groove in the tire radial direction on a cross section of a tire obtained by cutting the tire in a direction perpendicular to an extending direction of the groove. In a case where the groove depth of the groove varies in the tire width direction and/or in the circumferential direction, the groove depth shall be the maximum value of the distance.

A "groove depth H at a deepest part of two or more lateral grooves" refers to a groove depth of a groove whose groove depth at a deepest part is the deepest among the two or more adjacent lateral grooves.

An "effective ground-contacting region" is a region of a tread with which a tire touches the ground when the tire is pressed against the ground. The effective ground-contacting region is obtained by assembling the tire to a standardized rim, filling the tire with air at a standardized internal pressure, and leaving the tire to stand at 25°C for 24 hours, followed by applying ink to a tire tread surface, applying a standardized load (a load equal to the maximum load capacity) on the tire to perpendicularly press the tire tread surface on cardboard (a camber angle is 0°), and performing transcription of the ink.

A "plasticizing agent" is a material giving rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry.

"A loss tangent and a complex elastic modulus of a rubber composition" are a loss tangent (tan δ) and a complex elastic modulus E*, in MPa, that are measured with an extension mode, using a dynamic viscoelasticity measuring device (for example, EPLEXOR series manufactured by gabo Systemtechnik GmbH), under each condition. A sample used for dynamic viscoelasticity measurement is a vulcanized rubber composition having a length of 20 mm, a width of 4 mm, and a thickness of 1 mm. When a sample is prepared by being cut out from a tire, in a case where a member from which the sample is prepared is a tread part, a belt layer, or an inner liner, the direction of the length of the sample is made to match a tire circumferential direction, and the direction of the thickness of the sample is made to match a tire radial direction. In a case where a member from which the sample is prepared is a sidewall, a clinch, a bead apex, or a side reinforcement layer, the direction of the length of the sample is made to match a tangential direction relative to the circumference of the tire, and the direction of the thickness of the sample is made to match a tire width direction. Besides, in every case, the sample is prepared so that a size of the sample approximates a predetermined size as much as possible. This is because it is considered that there is no influence of the size of the sample since distortion applied to the sample is standardized with respect to its length and both of a tan δ and E* to be measured are standardized by a width and a thickness of the sample.

"0°C tan δ" and "0°C E*" are a loss tangent (tan δ) and a complex elastic modulus E*, in MPa, respectively, that are measured under a condition of a temperature at 0°C, a frequency of 10 Hz, an initial strain of 10%, a dynamic strain of ±2.5%, and an extension mode.

"30°C tan δ" and "30°C E*" are a loss tangent (tan δ) and a complex elastic modulus E*, in MPa, respectively, that are measured under a condition of a temperature at 30°C, a frequency of 10 Hz, an initial strain of 5%, a dynamic strain of ±1%, and an extension mode.

A "rubber component of a rubber composition" refers to a component contributing to crosslinking in the rubber composition and is generally a component having a weight-average molecular weight (Mw) of 10,000 or more.

A "glass transition temperature of a rubber component" is a static glass transition temperature of each rubber component calculated by a differential scanning calorimeter (for example, Q200 manufactured by TA Instruments Japan Inc.).

A content of a "styrene part" is calculated by pyrolysis gas chromatography or NMR measurement ($^1$H-NMR or $^{13}$C-NMR). For a component amount such as a "content of a styrene part", there is a true value that does not depend on any measuring methods, unlike physical property values such as a complex elastic modulus (E*) and the like. Therefore, it is preferable to use a measuring method that is as highly accurate as possible. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" is calculated by pyrolysis gas chromatography or NMR measurement ($^1$H-NMR or $^{13}$C-NMR). Also for a "vinyl content", there is a true value that does not depend on any measuring methods, like a "content of a styrene part". Therefore, it is preferable to use a measuring method that is as highly accurate as possible.

A "cis content (cis-1,4-bond butadiene unit amount)" is a value measured by infrared absorption spectrometry in accordance with JIS K 6239-2:2017 or NMR measurement ($^1$H-NMR or $^{13}$C-NMR) and is applied to a rubber component having a repeating unit derived from butadiene such as, for example, a BR and the like. Also for a "cis content", there is a true value that does not depend on any measuring methods, like a "content of a styrene part". Therefore, it is preferable to use a measuring method that is as highly accurate as possible.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area ($N_2$SA) of carbon black" is measured according to JIS K 6217-2:2017.

A "nitrogen adsorption specific surface area ($N_2$SA) of silica" is measured by a BET method according to ASTM D3037-93.

An "average primary particle size" is values calculated by an arithmetic mean of particle sizes of 400 particles which are photographed with a transmission or scanning electron microscope. In a case where the particle is in a spherical shape, a diameter of the sphere is defined as a particle size, and in cases of shapes other than the spherical shape, an equivalent circle diameter (positive square root of "4×(area of particle)/π") calculated from a microscope image is defined as a particle size.

A "softening point of a resin component" is a temperature at which a sphere drops when the softening point specified in JIS K 6220-1:2015 7.7 is measured with a ring and ball softening point measuring device.

[Tire]

The tire relating to one embodiment of the present invention will be described below with reference to the drawings. The tire relating to the present embodiment comprises a tread part, the tread part comprising two or more ribs partitioned off by one or more circumferential grooves, wherein at least one rib of the ribs is provided with two or more lateral grooves, wherein a length of a width direction component of each of the two or more lateral grooves is 20% or more of a width of the rib, wherein, in the two or more lateral grooves, at least some of circumferential direction components of adjacent lateral grooves overlap each other, wherein the tread part is composed of a predetermined rubber composition, and wherein H/S is less than 5.0, where H represents a groove depth, in mm, at a deepest part of the two or more lateral grooves, and S represents a total styrene amount, in % by mass, in the rubber composition constituting the tread part. Besides, the embodiment described below is merely one example, and the tire relating to the present embodiment is not limited to the embodiment described below.

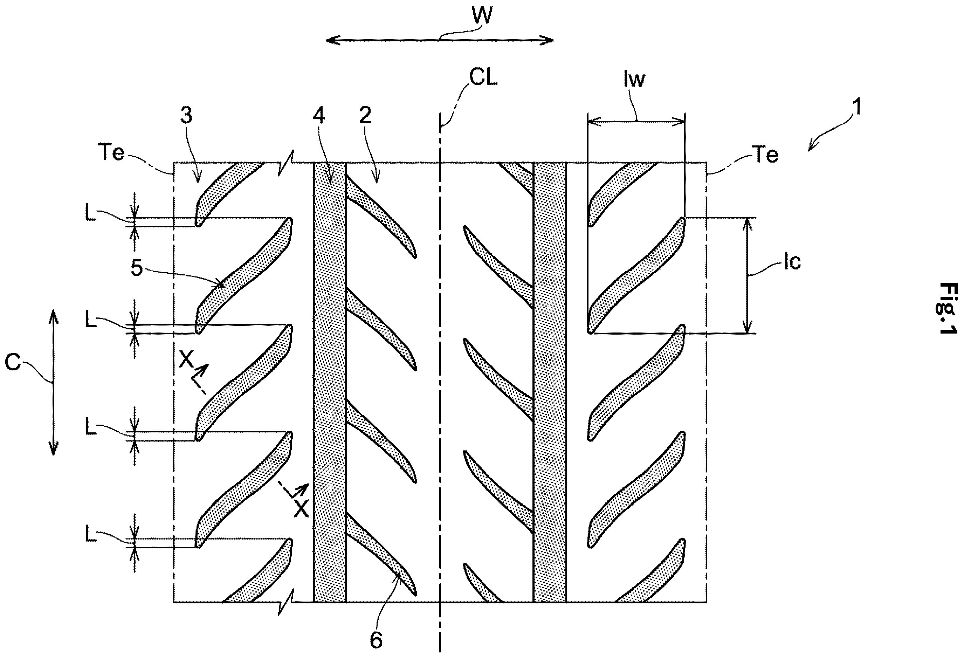

FIG. 1 is a view schematically showing a tread pattern of a tire relating to one embodiment of the present invention. In FIG, 1, W represents a tire width direction, C represents a tire circumferential direction, Te represents a tire ground-contacting end, and CL represents a tire equator.

A tread part 1 of the tire relating to the present embodiment comprises two or more ribs 2 and 3 partitioned off by one or more circumferential grooves 4. In FIG. 1, a tread surface is provided with two circumferential grooves 4. The number of circumferential grooves 4 that the tread part 1 relating to the present embodiment comprises is one or more, preferably two or more, more preferably three or more, further preferably four or more. Moreover, the tread part 1 preferably comprises five ribs partitioned off by four circumferential grooves.

At least one rib of the ribs 2 and 3 is provided with two or more lateral grooves 5 and 6 that have 20% or more of a tire width direction component of the rib. Each of the lateral grooves 5 and 6 comprises a tire width direction component Iw and a tire circumferential direction component Ic. For the tire relating to the present embodiment, in the two or more lateral grooves 5, at least some of circumferential direction components Ic of adjacent lateral grooves 5 overlap each other.

In FIG. 1, both the rib 2 located on the tire equator CL and the rib 3 partitioned off by a tire ground-contacting end Te and a circumferential groove 4 are provided with the lateral grooves that have 20% or more of the tire width direction component. However, the tire relating to the present embodiment is not limited to such an aspect, and the rib 2 located on the tire equator CL may not comprise any lateral grooves or may comprise a lateral groove of less than 20% of the tire width direction component of the rib. In FIG. 1, for lateral grooves 6 provided in the rib 2 located on the tire equator CL, circumferential direction components of adjacent lateral grooves 6 do not overlap each other.

In FIG. 1, one end of the lateral groove 6 provided in the rib 2 located on the tire equator CL communicates with the circumferential groove 4. However, the lateral groove 6 relating to the present embodiment is not limited to such an aspect, and it can be also formed as a closed lateral groove that is not open to any of the circumferential groove 4 and the tire ground-contacting ends Te. Moreover, in FIG. 1, the lateral groove 5 provided in the rib 3 partitioned off by the tire ground-contacting end Te and circumferential groove 4 is a closed lateral groove that is not open to any of the circumferential groove 4 and the tire ground-contacting end Te. However, the lateral groove relating to the present embodiment is not limited to such an aspect, and it may be open to a circumferential groove and/or a tire ground-contacting end.

It is preferable that the tread part relating to the present embodiment comprises five ribs partitioned off by four circumferential grooves and that, in one of the five ribs, at least some of circumferential direction components of adjacent lateral grooves overlap each other.

In FIG. 1, both the two circumferential grooves 4 extend linearly along the circumferential direction. However, the circumferential grooves relating to the present embodiment are not limited to such an aspect, and, for example, they may extend along the circumferential direction in a wavy, sinusoidal, or zigzag shape.

In FIG. 1, the overlapping parts of the circumferential direction components Ic of the two or more lateral grooves 5 in the rib 3 on the left side are indicated by L.

A total length of the overlapping parts L of the circumferential direction components of the two or more lateral grooves relative to the tire entire circumference is preferably 3.0% or more, more preferably 5.0% or more, further preferably 8.0% or more, particularly preferably 10.0% or more.

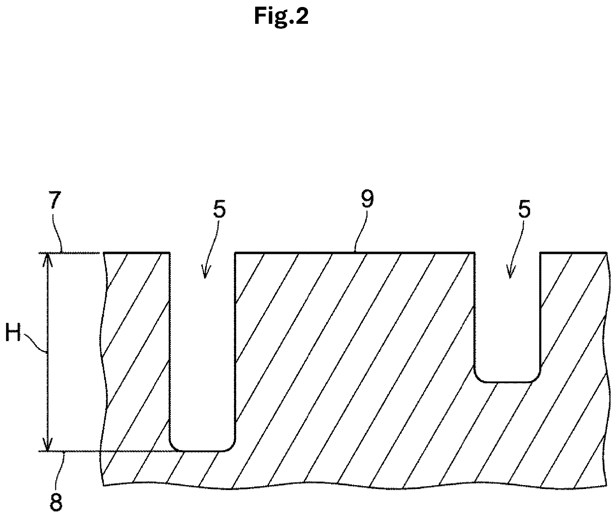

FIG. 2 is a cross-sectional view along the X-X line shown in FIG. 1. The cross section is a cross section obtained by cutting a tire in a direction perpendicular to an extending direction of two adjacent lateral grooves 5. FIG. 2 shows a straight line 7 obtained by connecting ends of lateral grooves on a tread surface 9 and an extension line 8 of a lowest part of the lateral grooves in a tire radial direction. A "groove depth H, in mm, of two or more lateral grooves" refers to a depth of a groove whose groove depth at a deepest part is the deepest among the two or more lateral grooves.

In FIG. 2, the two lateral grooves differ in groove depth, and the leftside groove is deeper than the right-side groove. The two or more lateral grooves relating to the present embodiment are not limited to such an aspect, and the two or more lateral grooves may have the same groove depth. In the tire relating to the present embodiment, all lateral grooves preferably have the same groove depth at their deepest parts.

A groove depth H of two or more lateral grooves at a deepest part is preferably 3.0 mm or more, more preferably 3.2 mm or more, further preferably 3.5 mm or more, further preferably 4.0 mm or more, from the viewpoint of the effects of the present invention. Moreover, the groove depth H of the deepest part of the two or more lateral grooves is preferably 12.0 mm or less, more preferably 10.0 mm or less, further preferably 8.0 mm or less.

A total styrene amount S in the rubber composition constituting the tread part relating to the present embodiment is preferably 0.6% by mass or more, more preferably 5.0% by mass or more, further preferably 8.0% by mass or more, particularly preferably 10.0% by mass or more. Moreover, the total styrene amount S in the rubber composition constituting the tread part is preferably 25.0% by mass or less, more preferably 20.0% by mass or less, further preferably 15.0% by mass or less.

H/S is less than 5.0, preferably less than 3.0, more preferably less than 1.0, further preferably less than 0.80, further preferably less than 0.60, particularly preferably less than 0.50. Moreover, H/S is preferably greater than 0.10, more preferably greater than 0.20, further preferably greater than 0.30.

A tan $\delta$ at 0°C (0°C tan $\delta$) of the rubber composition constituting the tread part is preferably 0.35 or more, more preferably 0.40 or more, further preferably 0.45 or more. Moreover, 0°C tan $\delta$ is preferably 0.60 or less, more preferably 0.55 or less, further preferably 0.50 or less.

A complex elastic modulus at 0°C (0°C E*) of the rubber composition constituting the tread part is preferably 4.5 MPa or more, more preferably 5.0 MPa or more, further preferably 5.5 MPa or more, particularly preferably 6.0 MPa or more. Moreover, 0°C E* is preferably 9.0 MPa or less, more preferably 8.5 MPa or less, further preferably 8.0 MPa or less.

A tan δ at 30°C (30°C tan δ) of the rubber composition constituting the tread part is preferably 0.15 or more, more preferably 0.18 or more, further preferably 0.20 or more. Moreover, 30°C tan δ is preferably 0.30 or less, more preferably 0.28 or less, further preferably 0.25 or less.

A complex elastic modulus at 30°C (30°C E*) of the rubber composition constituting the tread part is preferably 1.8 MPa or more, more preferably 2.0 MPa or more, further preferably 2.2 MPa or more. Moreover, 30°C E* is preferably 3.5 MPa or less, more preferably 3.0 MPa or less, further preferably 2.8 MPa or less.

0°C tan δ/0°C E*×1000 is preferably greater than 55, more preferably greater than 60, further preferably greater than 65, further preferably greater than 67, particularly preferably greater than 68, from the viewpoint of achievement of both fuel efficiency and wet grip performance. Moreover, 0°C tan δ/0°C E*×1000 is preferably less than 100, more preferably less than 91, further preferably less than 80.

30°C tan δ×30°C E*×100 is preferably less than 65, more preferably less than 60, further preferably less than 55, from the viewpoint of the effects of the present invention. Moreover, 30°C tan δ×30°C E*×100 is preferably greater than 30, more preferably greater than 40, further preferably greater than 50.

30°C E*/H is preferably 0.65 or less, more preferably 0.60 or less, further preferably 0.55 or less, particularly preferably 0.50 or less, from the viewpoint of the effects of the present invention. Moreover, 30°C E*/H is preferably 0.30 or more, more preferably 0.35 or more, further preferably 0.40 or more.

Besides, each physical property of the rubber composition such as tan δ, E*, and the like can be appropriately adjusted depending on types or compounding amounts of a rubber component, a filer, a plasticizing agent, and the like that are described below. For example, 30°C tan δ can be adjusted depending on a type of a resin component.

In a case where the tread part comprises two or more layers, at least one layer of the layers constituting the tread part preferably satisfies each physical property described above, and a cap rubber layer of the two or more rubber layers constituting the tread part, which constitutes a tread surface, more preferably satisfies the above-described physical properties.

[Rubber composition]

A rubber composition relating to the present embodiment, which constitutes a tread part, will be described below. The rubber composition of the present embodiment comprises a rubber component and a plasticizing agent.

<Rubber component>

The rubber component comprises one or more selected from the group consisting of a styrene-butadiene rubber (SBR) and an isoprene-based rubber, preferably comprises an SBR and an isoprene-based rubber, and more preferably comprises an SBR, an isoprene-based rubber, and a butadiene rubber (BR).

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include an SBR modified at its terminal and/or main chain; a modified SBR coupled with tin, a silicon compound, etc. (a modified SBR of condensate or having a branched structure, etc.); and the like. Furthermore, hydrogenated ones of these SBRs (hydrogenated SBRs) and the like can also be used. These SBRs may be used alone, or two or more thereof may be used in combination.

An oil-extended SBR or a non-oil extended SBR can be used as an SBR. In the present invention, as an SBR, those commercially available from JSR Corporation, Sumitomo Chemical Co., Ltd., Ube Corporation, Asahi Kasei Corporation, ZS Elastomer Co., Ltd., ARLANXEO, etc. can be used.

A styrene content of an SBR is preferably greater than 10% by mass, more preferably greater than 15% by mass, further preferably greater than 18% by mass, from the viewpoint of a compatibility with a copolymer resin comprising styrene and cyclopentadiene as monomer components. On the other hand, the styrene content of the SBR is preferably less than 55% by mass, more preferably less than 50% by mass, further preferably less than 45% by mass. When the styrene content of the SBR is greater than 55% by mass, styrene groups become adjacent to each other, a polymer becomes too hard, crosslinking easily becomes non-uniform, a change in performance relative to a change in temperature becomes large, and thus a stable grip performance tends not to be obtained favorably. Besides, the styrene content of the SBR is measured by the above-described measuring method.

A vinyl content of an SBR is preferably greater than 10 mol%, more preferably greater than 15 mol%, further preferably greater than 18 mol%. Moreover, the vinyl content of the SBR is preferably less than 70 mol%, more preferably less than 65 mol%, further preferably less than 60 mol%. Besides, in the present specification, the vinyl content of the SBR is measured by the above-described measuring method.

A glass transition point (Tg) of an SBR is preferably -80°C or higher, more preferably -70°C or higher, further preferably -65°C or higher, from the viewpoint of wet grip performance. Moreover, the Tg of the SBR is preferably -55°C or lower, from the viewpoint of fuel efficiency. Besides, the Tg of the SBR is measured by the above-described measuring method.

A weight-average molecular weight (Mw) of an SBR is preferably greater than 200,000, more preferably greater than 300,000, further preferably greater than 400,000, particularly preferably greater than 500,000. Moreover, the Mw is preferably less than 2,000,000, more preferably less than 1,500,000, further preferably less than 1,000,000, from the viewpoints of cross-linking uniformity, etc. Besides, the Mw of the SBR is measured by the above-described measuring method.

A content of an SBR in the rubber component (a total content of two or more SBRs when compounded in the rubber component) is preferably greater than 30% by mass, more preferably greater than 40% by mass, further preferably greater than 50% by mass, particularly preferably greater than 55% by mass, from the viewpoint of a compatibility with a copolymer resin comprising styrene and cyclopentadiene as monomer components. Moreover, the content of the SBR in the rubber component is preferably less than 80% by mass, more preferably less than 75% by mass.

(Isoprene-based rubber)

As an isoprene-based rubber, for example, those common in the tire industry can be used, such as an isoprene rubber (IR), a natural rubber, and the like. Examples of the natural rubber include not only an unmodified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of an isoprene-based rubber in the rubber component is preferably greater than 10% by mass, more preferably greater than 15% by mass, further preferably greater than 20% by mass, particularly preferably greater than 25% by mass. Moreover, the content of the isoprene-based rubber in the rubber component is preferably less than 60% by mass, more preferably less than 50% by mass, further preferably less than 40% by mass.

(Diene-based rubber)

As a rubber component other than the SBR and isoprene-based rubber, a diene-based rubber other than the SBR and isoprene-based rubber are appropriately used. Examples of such a diene-based rubber include, for example, a butadiene rubber (BR), a styrene-isoprene rubber (SIR), a styrene-isoprene-butadiene rubber (SIBR), a chloroprene rubber (CR), an acrylonitrilebutadiene rubber (NBR), and the like. These diene-based rubbers may be modified rubbers each treated with a modified group that can interact with a filler such as carbon black, silica, and the like or may be hydrogenated rubbers in which hydrogeneration treatment is performed on a part of an unsaturated bond. The diene-based rubber may be used alone, or two or more thereof may be used in combination. Moreover, as a diene-based rubber, an extended rubber previously extended with a plasticizing agent described below may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

The rubber composition relating to the present embodiment comprises, as a diene-based rubber, one or more selected form the group consisting of an SBR and an isoprene-based rubber, preferably comprises an SBR and an isoprene-based rubber, and more preferably comprises an SBR, an isoprene-based rubber, and a BR.

(BR)

The BR is not particularly limited, and those common in the tire industry can be used, such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of the high cis BR is preferably greater than 95 mol%, more preferably greater than 96 mol%, further preferably greater than 97 mol%. Besides, the cis content of the BR is measured by the above-described measuring method.

Examples of the rare-earth-based BR include those which are synthesized using a rare-earth element-based catalyst and have a vinyl content of preferably less than 1.8 mol%, more preferably less than 1.6 mol%, further preferably 1.5 mol% or less, and a cis content of preferably greater than 95 mol%, more preferably greater than 96 mol%, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

Examples of the modified BR include BRs modified with the same functional groups as described above for the SBR, and the like, and a modified butadiene rubber (modified BR) modified at its terminal and/or main chain with a functional group comprising at least one element selected from the group consisting of silicon, nitrogen, and oxygen can be also appropriately used.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either nonhydrogenated or hydrogenated.

A weight-average molecular weight (Mw) of a BR is preferably greater than 300,000, more preferably greater than 350,000, further preferably greater than 400,000, from the viewpoint of abrasion resistance. Moreover, it is preferably less than 2,000,000, more preferably less than 1,000,000, further preferably less than 500,000, from the viewpoints of cross-linking uniformity, etc. Besides, the Mw of the BR can be calculated by the above-described method.

A content of a BR in the rubber component is preferably 3% by mass or more, more preferably 5% by mass or more, further preferably 10% by mass or more. Moreover, the content of the BR in the rubber component is preferably 50% by mass or less, more preferably 40% by mass or less, further preferably 30% by mass or less.

(Other rubber components)

The rubber component may comprise a rubber component other than diene-based rubbers (non-diene-based rubber) as long as it does not affect the effects of the present invention. As a non-diene-based rubber, a rubber component commonly used in the tire industry can be used, examples of which include, for example, a butyl-based rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Moreover, besides the above-described rubber components, it may or may not comprise a known thermoplastic elastomer.

(Rubber component synthesized from recycle-derived/biomass-derived raw material)

A monomer that is a structural unit of a synthetic rubber such as an IR, an SBR, a BR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1,3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, and combinations thereof.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A halflife of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere and the like was absorbed by plants to be fixed, all of $^{14}C$ elements, which were also contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

[Filler]

The rubber composition relating to the present embodiment preferably comprises a filler, and the filler preferably comprises silica and more preferably comprises carbon black and silica. Moreover, the filler may be a filler consisting of carbon black and silica.

<Silica>

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than 100 $m^2/g$, more preferably greater than 150 $m^2/g$, further preferably greater than 170 $m^2/g$, from the viewpoint of reinforcing property. Moreover, it is preferably less than 250 $m^2/g$, more preferably less than 200 $m^2/g$, further preferably less than 180 $m^2/g$, from the viewpoints of heat generation and processability. Besides, the $N_2SA$ of the silica is measured by the above-described measuring method.

An average primary particle size of silica is preferably greater than 10 nm, more preferably greater than 12 nm, further preferably greater than 15 nm, from the viewpoint of reinforcing property. Moreover, the average primary particle size is preferably less than 25 nm, more preferably less than 20 nm. Besides, the average primary particle size of silica is measured by the above-described measuring method.

A content of silica in the filler is preferably 50% by mass or more, more preferably 60% by mass or more, further preferably 70% by mass or more. Moreover, the content of the silica in the filler is preferably 95% by mass or less, more preferably 90% by mass or less.

A content of silica based on 100 parts by mass of the rubber component is preferably 30 parts by mass or more, more preferably 40 parts by mass or more, further preferably 50 parts by mass or more, further preferably 55 parts by mass or more, particularly preferably 60 parts by mass or more, from the viewpoint of wet grip performance. Moreover, the content of the silica based on 100 parts by mass of the rubber component is preferably less than 120 parts by mass, more preferably less than 100 parts by mass, further preferably less than 80 parts by mass.

<Silane coupling agent>

Silica is preferably used in combination with a silane coupling agent. The silane coupling agent is not particularly limited, and examples of the silane coupling agent include, for example, a sulfide-based silane coupling agent such as bis(3-triethoxysilylpropyl)disulfide, bis(3-triethoxysilylpropyl)tetrasulfide, and the like; a mercapto-based silane coupling agent, such as 3-mercaptopropyltrimethoxysilane, 3-mercaptopropyltriethoxysilane, 2-mercaptoethyltrimethoxysilane, 2-mercaptoethyltriethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as $\gamma$-glycidoxypropyltriethoxysilane, $\gamma$-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Industries AG, Momentive Performance Materials, etc. can be used. These silane coupling agents may be used alone, or two or more thereof may be used in combination.

A content of a silane coupling agent is preferably greater than 5 parts by mass, more preferably greater than 7 parts by mass, based on 100 parts by mass of silica, from the viewpoint of enhancing dispersibility of silica. Moreover, it is preferably less than 15 parts by mass, more preferably less than 10 parts by mass, further preferably less than 9 parts by mass, from the viewpoints of cost and processability.

A content of a silane coupling agent based on 100 parts by mass of the rubber component (a total amount of all of a plurality of silane coupling agents when used in combination) is preferably greater than 2 parts by mass, more preferably greater than 3 parts by mass, further preferably greater than 4 parts by mass, from the viewpoint of enhancing dispersibility of silica. Moreover, the content is preferably less than 12 parts by mass, more preferably less than 10 parts by mass, further preferably less than 8 parts by mass, from the viewpoint of preventing deterioration of abrasion resistance.

<Carbon black>

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. The carbon black may be used alone, or two or more thereof may be used in combination.

Moreover, as carbon black other than the above-described carbon black, carbon black made of a biomass material such as lignin and the like or a recovered carbon black obtained by pyrolyzing a product comprising carbon black such as a tire and the like followed by refining may be used from the viewpoints of a life cycle assessment, etc.

In the present specification, the term "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight lost content due to the oxidative combustion of the recovered carbon black is 87% by mass or less. The recovered carbon black may be expressed by rCB.

A recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LD Carbon, etc. can be used.

A nitrogen adsorption specific surface area ($N_2SA$) of carbon black is preferably greater than 80 $m^2/g$, more preferably greater than 90 $m^2/g$, further preferably greater than 100 $m^2/g$, particularly preferably greater than 110 $m^2/g$, from the viewpoint of reinforcing property. Moreover, it is preferably less than 200 $m^2/g$, more preferably less than 150 $m^2/g$, further preferably less than 120 $m^2/g$, from the viewpoints of heat generation and processability. Besides, the $N_2SA$ of the carbon black is measured by the above-described measuring method.

An average primary particle size of carbon black is preferably greater than 15 nm, more preferably greater than 18 nm, further preferably greater than 20 nm. Moreover, the average primary particle size is preferably less than 50 nm, more preferably less than 40 nm, further preferably less than 30 nm. Besides, the average primary particle size of the carbon black is measured by the above-described measuring method.

A content of carbon black based on 100 parts by mass of the rubber component is preferably 3 parts by mass or more, more preferably 5 parts by mass or more, further preferably 10 parts by mass or more. Moreover, the content of the carbon black based on 100 parts by mass of the rubber component is preferably 60 parts by mass or less, more preferably 50 parts by mass or less, further preferably 40 parts by mass or less.

<Other fillers>

The filler may comprise another filler other than silica and carbon black. The other filler is not particularly limited, and as the other filler, those conventionally and commonly used in the tire industry can be compounded, such as, for example, aluminum hydroxide, calcium carbonate, alumina, clay, talc, and the like.

<Plasticizing agent>

The rubber composition relating to the present embodiment comprises a plasticizing agent and comprises, as a plasticizing agent, a copolymer resin comprising styrene and cyclopentadiene as monomer components.

A plasticizing agent is a material giving a rubber component plasticity and includes both a plasticizing agent that is in a liquid state at 25°C and a plasticizing agent that is solid at 25°C. Examples of the plasticizing agent include a resin component, oil, a liquid rubber, an ester-based plasticizing agent, and the like. These plasticizing agents may be ones derived from mineral resources such as petroleum, natural gas, and the like, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

<<Copolymer resin comprising styrene and cyclopentadiene as monomer components>>

The copolymer resin comprising styrene and cyclopentadiene as monomer components is not particularly limited as long as it is a resin comprising styrene and cyclopentadiene as monomer components, and the copolymer resin may be one further comprising another monomer component as described below. Moreover, the copolymer resin may be one obtained by hydrogenating or modifying it. The "styrene" constituting monomer components may be a compound having a styrene structure other than styrene, and examples of such a compound include, for example, styrene, $\alpha$-methylstyrene, vinyltoluene, chlorostyrene, and the like.

The other monomer component other than styrene and cyclopentadiene is not particularly limited and is preferably a monomer component commonly used for a petroleum resin, more preferably a C9 fraction and the like described below, further preferably indene.

The copolymer resin is preferably a copolymer resin comprising styrene, cyclopentadiene and/or dicyclopentadiene, and indene as monomer components or may be one obtained by hydrogenating or modifying the copolymer resin.

As the copolymer resin, for example, those commercially available from Exxon Mobil Corporation, ENEOS Corporation, Zeon Corporation, Maruzen Petrochemical Co., Ltd., etc. can be used. The resin may be used alone, or two or more thereof may be used in combination.

A content of a styrene part of the copolymer resin is preferably 0.5% by mass or more, more preferably 0.8% by mass or more, further preferably 1.0% by mass or more, from the viewpoint of the effects of the present invention. Moreover, an upper limit value of the content of the styrene part is not particularly limited and can be, for example, less than 50% by mass, less than 40% by mass, less than 30% by mass, 10% by mass or less, 5% by mass or less, 3% by mass or less, or the like.

A softening point of the copolymer resin is preferably higher than 70°C, more preferably higher than 80°C, further preferably higher than 90°C, particularly preferably higher than 100°C, from the viewpoint of the effects of the present invention. Moreover, it is preferably lower than 150°C, more preferably lower than 140°C, further preferably lower than 130°C, from the viewpoints of processability and improvement in dispersibility of a rubber component with a filler. Besides, the softening point of the resin component is measured by the above-described measuring method.

A content of the copolymer resin based on 100 parts by mass of the rubber component is preferably greater than 5 parts by mass, more preferably greater than 10 parts by mass, further preferably greater than 15 parts by mass, further preferably greater than 19 parts by mass. Moreover, the content is preferably less than 100 parts by mass, more preferably less than 80 parts by mass, further preferably less than 60 parts by mass, particularly preferably less than 40 parts by mass, from the viewpoint of processability.

(Other resin components)

The rubber composition relating to the present embodiment may comprise another resin component other than the copolymer resin comprising styrene and cyclopentadiene as monomer components. The other resin component is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, or two or more thereof may be used in combination, respectively.

<<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying it. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

<<C5-based resin>>

A "C5-based resin" refers to a resin obtained by polymerizing C5 fractions and may be one obtained by hydrogenating or modifying it. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

<<C5/C9-based resin>>

A "C5/C9-based resin" refers to a resin obtained by copolymerizing the C5 fraction and the C9 fraction and may be one obtained by hydrogenating or modifying it. As the C5/C9-based resin, for example, those commercially available from Tosoh Corporation, Zibo Luhua Hongjin New Material Group Co., Ltd, etc. can be used.

<<Dicyclopentadiene-based resin>>

A "dicyclopentadiene-based resin" refers to a resin comprising cyclopentadiene (CPD) and/or dicyclopentadiene (DCPD) as a monomer component having the largest content and may be one obtained by hydrogenating or modifying it. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying it. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

<<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

<<Terpene-based resin>>

A "terpene-based resin" refers to a resin comprising a terpene compound such as $\alpha$-pinene, $\beta$-pinene, limonene, dipentene, and the like as a monomer component, and may be one obtained by hydrogenating or modifying it. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

<<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying it. Example of the rosin-based resin include, but not particularly limited to, for example, a natural resin rosin, a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

<<Phenol-based resin>>

A "phenol-based resin" refers to a resin comprising a phenolic compound such as phenol, cresol, and the like as a monomer component, and may be one obtained by hydrogenating or modifying it. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

<<Softening point>>

A softening point of a resin component is preferably higher than 80°C, more preferably higher than 90°C, further preferably higher than 100°C, from the viewpoint of wet grip performance. Moreover, it is preferably lower than 150°C, more preferably lower than 140°C, further preferably lower than 130°C, from the viewpoints of processability and improvement in dispersibility of a rubber component with a filler. Besides, the softening point of the resin component is measured by the above-described measuring method.

(Plasticizing agent other than resin component)

Oil, a liquid rubber, and an ester-based plasticizing agent, which are plasticizing agents other than the resin component, will be described.

(Oil)

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may be also used. The oils may be used alone, or two or more thereof may be used in combination.

In the present specification, "mineral oil" refers to oil derived from mineral resources such as petroleum, natural gas, and the like. Examples of mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol derived therefrom, and the like.

A content of oil when compounded based on 100 parts by mass of the rubber component is preferably 5 parts by mass or more, more preferably 8 parts by mass or more, further preferably 10 parts by mass or more, from the viewpoint of processability. Moreover, the content of the oil is preferably 60 parts by mass or less, more preferably 50 parts by mass or less, further preferably 30 parts by mass or less, from the viewpoint of the effects of the present invention.

(Liquid rubber)

The liquid rubber is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid rubber may be used alone, or two or more thereof may be used in combination.

(Ester-based plasticizing agent)

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

[Other compounding agents]

The rubber composition relating to the present embodiment can appropriately comprises compounding agents conventionally and commonly used in the tire industry, such as, for example, processing aid, a vulcanized rubber particle, wax, stearic acid, zinc oxide, an antioxidant, a vulcanizing agent, a vulcanization accelerator, and the like, in addition to the rubber component, the filler, and the plasticizing agent.

(Processing aid)

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.
A content of processing aid when compounded based on 100 parts by mass of the rubber component is preferably greater than 0.5 parts by mass, more preferably greater than 1 part by mass, further preferably greater than 1.5 parts by mass, from the viewpoint of exerting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Vulcanized rubber particle)

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle may be used alone, or two or more thereof may be used in combination.
The vulcanized rubber particle is not particularly limited and may be an unmodified vulcanized rubber particle or a modified vulcanized rubber particle.
As a commercially available product of a vulcanized rubber, for example, products manufactured by Lehigh Technologies, Muraoka Rubber Reclaiming Co., Ltd. etc. can be used.

(Wax)

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.
A content of wax when compounded based on 100 parts by mass of the rubber component is preferably greater than 0.5 parts by mass, more preferably greater than 1.0 parts by mass, further preferably greater than 1.5 parts by mass, from the viewpoint of weather resistance of a rubber. Moreover, it is preferably less than 10 parts by mass, more preferably less than 7.0 parts by mass, further preferably less than 5.0 parts by mass, from the viewpoint of prevention of whitening of a tire due to bloom.

(Stearic acid)

A content of stearic acid when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of abrasion resistance.

(Antioxidant)

Examples of the antioxidant include, but not particularly limited to, a naphthylamine-based antioxidant such as phenyl-α-naphthylamine and the like; a diphenylamine-based antioxidant such as octylated diphenylamine, 4,4'-bis(α,α'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably greater than 1 part by mass, more preferably greater than 2 parts by mass, further preferably greater than 3 parts by mass, from the viewpoint of ozone crack resistance of a rubber. Moreover, it is preferably less than 10 parts by mass, more preferably less than 8 parts by mass, further preferably less than 5 parts by mass, from the viewpoints of abrasion resistance and wet grip performance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agents can be used alone, or two or more thereof can be used in combination.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of prevention of deterioration. Besides, a content of a vulcanizing agent when an oil-containing sulfur is used as the vulcanizing agent is defined as a total content of pure sulfur contained in the oil-containing sulfur.

Examples of the vulcanizing agent other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used. The vulcanizing agents can be used alone, or two or more thereof can be used in combination.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehydeammonia-based, imidazoline-based, and xanthate-based vulcanization accelerators and the like. Among them, a sulfenamide-based vulcanization accelerator, a thiazole-based vulcanization accelerator, and a guanidine-based vulcanization accelerator, are preferable. The vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

A content of a vulcanization accelerator when compounded based on 100 parts by mass of the rubber component is preferably 1 part by mass or more, more preferably 1.5 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Various materials comprising carbon atoms>

In the present specification, various materials each having a carbon atom (for example, a rubber, oil, a resin component, a vulcanization accelerator, an antioxidant, a surfactant, and the like) may be derived from carbon dioxide in the atmosphere. These various materials can be obtained by converting carbon dioxide directly or converting methane obtained via a process of methanation by which methane is synthesized from carbon dioxide.

[Production method]

The rubber composition can be produced by a known method. For example, it can be produced by kneading the respective above-described components with a rubber kneading machine such as an open roll, a sealed type kneader (a Banbury mixer, a kneader, and the like), and the like.
The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can be also divided into multiple steps as necessary. In a case where the base kneading step is divided, a method of dividing the base kneading step may be: (1) a method of previously kneading a part of compounding agents and additives into a masterbatch and then adding the remaining compounding agents and additives to the obtained masterbatch to knead them; (2) a method of kneading all of compounding agents and additives to be kneaded in the base kneading step at once, and then remilling the kneaded product one or more times; or the like. In the above-described method (1), the number of masterbatches is not limited and may be two or more. Moreover, when the number of masterbatches is two or more, all of compounding agents and additives used in the base kneading step may be allocated to any of the masterbatches.
Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.
The tire relating to the present embodiment can be produced using the rubber composition by a usual method. That is, an unvulcanized rubber composition is extruded into a shape of a tread part, and the unvulcanized tread part is then attached together with other tire members on a tire molding machine to form an unvulcanized tire by a usual method. The unvulcanized tire thus obtained is heated and pressurized in a vulcanizer, whereby the tire relating to the present embodiment can be produced. Examples of vulcanization conditions include, but not particularly limited to, for example, a method of vulcanizing at 150°C to 200°C for 10 to 30 minutes.

[Applications]

In the present specification, examples of the tire include a pneumatic tire, a non-pneumatic tire, and the like. Among them, a pneumatic tire is preferable. The pneumatic tire can be used as a tire for a passenger car, a tire for a large passenger car, a tire for a large SUV, a tire for a small SUV, a heavy-duty tire, a tire for a small truck, a motorcycle tire, a racing tire, or the like. Among them, it can be appropriately used as a tire for a SUV and can be optimally used as a tire for a large SUV. Besides, in the present specification, a heavy-duty tire is a tire that is presupposed to be mounted to a vehicle running with four wheels and that has a maximum load capacity of 1000 kg or more.

EXAMPLE

Hereinafter, examples considered to be preferable in implementing the present invention (Examples) will be described, though the scope of the present invention is not limited to these Examples. Results, which are calculated based on evaluation methods described below considering a rubber composition and a tire, the rubber composition and the tire being obtained in accordance with Table 1 using various chemicals described below, are shown in Table 1.

<Various chemicals>

Chemicals used in Examples and Comparative examples are collectively shown below.

NR: TSR 20

SBR1: SBR produced in Production example 1 described below (S-SBR, Tg: -66°C, content of styrene part: 19% by mass, vinyl content: 19 mol%, non-oil extended)

SBR2: SBR produced in Production example 2 described below (S-SBR, Tg: -24°C, content of styrene part: 25% by mass, vinyl content: 61 mol%, non-oil extended)

BR: Ubepol BR (Registered Trademark) 150B manufactured by UBE Corporation (unmodified BR, cis content: 97 mol%, Mw: 440,000)

Carbon black: SEAST N220 manufactured by TOKAI CARBON CO., LTD. ($N_2SA$: 114 $m^2/g$, average primary particle size: 22 nm)

Silica: Ultrasil VN3 manufactured by Evonik Industries AG ($N_2SA$: 175 $m^2/g$, average primary particle size: 18 nm)

Silane coupling agent: NXT manufactured by Momentive Performance Materials (3-octanoylthio-propyltriethoxysilane)

Oil: VivaTec 500 manufactured by H&R Group (TDAE oil)

Resin component 1: Oppera PR383 manufactured by Exxon Mobil Chemical (hydrogenated DCPD-C9 resin; comprising styrene and cyclopentadiene as monomer components, Mw: 770, softening point: 103°C, content of styrene part: 1.78% by mass)

Resin component 2: SYLVATARAXX 4150 manufactured by Kraton Corporation (polyterpene resin, Mw: 2500, softening point: 115°C)

Wax: OZOACE WAX manufactured by Nippon Seiro Co., Ltd. (paraffin wax)

Stearic acid: Bead stearic acid "CAMELLIA" manufactured by NOF CORPORATION

Zinc oxide: Zinc oxide No. 1 manufactured by Mitsui Mining & Smelting Co., Ltd.

Antioxidant 1: Nocrac 6C (6PPD) manufactured by Ouchi Shinko Chemical Industry Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly(2,2,4-trimethyl-1,2-dihydroquinoline))

Sulfur: HK-200-5 manufactured by Hosoi Chemical Industry Co., Ltd. (5% oil-containing powdery sulfur)

Vulcanization accelerator 1: Nocceler CZ manufactured by Ouchi Shinko Chemical Industry Co., Ltd. (N-cyclohexyl-2-benzothiazolylsulfenamide (CBS))

Vulcanization accelerator 2: Nocceler D manufactured by Ouchi Shinko Chemical Industry Co., Ltd. (1,3-diphenylguanidine (DPG))

[Production example]

Production example 1: Production of SBR1

Cyclohexane, tetrahydrofuran, styrene, and 1,3-butadiene are charged into an autoclave reactor subjected to nitrogen purge. After adjusting the temperature of the contents in the reactor to 20°C, n-butyllithium is added to initiate polymerization. Polymerization is carried out under an adiabatic condition, and the temperature reaches 85°C of the maximum temperature. When a polymerization conversion rate reaches 99%, 1,3-butadiene is added, and after performing further polymerization for 5 minutes, N,N-bis(trimethylsilyl)-3-aminopropyltriethoxysilane is added as a modifying agent to perform a reaction. After completion of the polymerization reaction, 2,6-di-tert-butyl-p-cresol is added. Next, the mixture is subjected to removal of solvent by a steam stripping and dried by a heat roll whose temperature is adjusted to 110°C to obtain SBR1.

Production example 2: Production of SBR2

Cyclohexane, tetrahydrofuran, styrene, and 1,3-butadiene are charged into an autoclave reactor subjected to nitrogen purge. After adjusting the temperature of the contents in the reactor to 20°C, n-butyllithium is added to initiate polymerization. Polymerization is performed under an adiabatic condition, and the temperature reaches 85°C of the maximum temperature. When a polymerization conversion rate reaches 99%, 1,3-butadiene is added, and after performing further polymerization for 5 minutes, a mixture of tetraglycidyl-1,3-bisaminomethylcyclohexane (monomer) and an oligomer component is added as a modifying agent to perform a reaction. After completion of the polymerization reaction, 2,6-di-tert-butyl-p-cresol is added. Next, the mixture is subjected to removal of solvent by a steam stripping and dried by a heat roll whose temperature is adjusted to 110°C to obtain SBR2.

(Examples and Comparative examples)

According to the compounding formulations shown in Table 1, using a 1.7 L closed Banbury mixer, all chemicals other than sulfur and a vulcanization accelerator are kneaded for 1 to 10 minutes until a temperature reaches a discharge temperature at 150°C to 160°C to obtain a kneaded product. Next, using a twin-screw open roll, sulfur and the vulcanization accelerator are added to the obtained kneaded product, and the mixture is kneaded for 4 minutes until the temperature reaches 105°C to obtain an unvulcanized rubber composition. The unvulcanized rubber composition is used to be extruded into a shape of a tread part with an extruder equipped with a mouthpiece having a predetermined shape, which is then attached together with other tire members to prepare an unvulcanized tire, and the unvulcanized tire is vulcanized at 170°C to obtain each test tire (size: 235/70R16). A tread pattern for all the tires is one shown in FIG. 1. Moreover, lateral grooves in each test tire have the same groove depth at their deepest parts. For all the tires, a total length of overlapping parts L of circumferential direction components relative to the tire entire circumference is 8.3%.

<Measurement of 0°C tan $\delta$ and 0°C E*>

A rubber test piece is prepared by being cut out from a tread part of each test tire with 20 mm in length, 4 mm in width, and 1 mm in thickness so that a tire-circumferential direction becomes a long side and a tire radial direction becomes a thickness direction. For each rubber test piece, a loss tangent (tan $\delta$) and a complex elastic modulus $E_*$, in MPa, are measured, using EPLEXOR series manufactured by gabo Systemtechnik GmbH, under a condition of a temperature at 0°C, a frequency of 10 Hz, an initial strain of 10%, a dynamic strain of $\pm 2.5\%$, and an extension mode.

<Measurement of 30°C tan $\delta$ and 30°C E*>

A rubber test piece is prepared by being cut out from a tread part of each test tire with 20 mm in length, 4 mm in width, and 1 mm in thickness so that a tire-circumferential direction becomes a long side and a tire radial direction becomes a thickness direction. For each rubber test piece, a loss tangent (tan $\delta$) and a complex elastic modulus $E_*$, in MPa, are measured, using EPLEXOR series manufactured by gabo Systemtechnik GmbH, under a condition of a temperature at 30°C, a frequency of 10 Hz, an initial strain of 10%, a dynamic strain of $\pm 1\%$, and an extension mode.

<Fuel efficiency>

Rolling resistance of each test tire is measured using a rolling resistance tester when the test tire is made to run under a condition of a load of 3.43 kN, and at a speed of 80 km/h, and the reciprocal number of the rolling resistance is indicated as an index with the reference Comparative example being as 100. The results show that the larger the index is, the smaller the rolling resistance is and the more excellent the fuel efficiency is. The reference Comparative example is Comparative example 1.

<Wet grip performance>

Each test tire is mounted on all wheels of a vehicle (a domestic FF vehicle with a displacement of 2000 cc), and a braking distance at an initial speed of 100 km/h on a wet asphalt road surface is measured, and a measurement result is indicated as an index by the following equation. The higher the index is, the shorter the braking distance is and the more excellent the wet grip performance is. For wet grip performance indexes, the reference Comparative example is Comparative example 1.

(Wet grip performance index) = (braking distance of tire of reference Comparative example) / (braking distance of each test tire) $\times$ 100.

<Quietness Performance>

Each test tire is mounted on all wheels of a vehicle (a domestic FF vehicle with a displacement of 2000 cc), and the vehicle running is performed in such a manner that the vehicle is made to run 10 laps at about 80 km/h on a test course with a dry asphalt road surface. In that case, 20 test drivers perform sensory evaluations on quietness performance in a booming-sound range around 40 Hz to 80 Hz, in a low-frequency range from 100 Hz to 160 Hz, in a medium-frequency range from 250 Hz to 400 Hz, and in a high-frequency range from 630 Hz to 1250 Hz. The evaluations are performed using an integer value of 1 to 5 points (better quietness performance has a higher score), and a total score by the 20 test drivers is calculated. A total score of the reference Comparative example (Comparative example 1) is converted into a reference value (100), and an evaluation result for each test tire is indicated as an index in proportion to the total score. The results show that the larger the numerical value is, the better the quietness performance is.

<Overall performance>

A sum of a fuel efficiency index, a wet grip performance index, and a quietness performance index is indicated as an overall performance index.

Table 1

| | Example | | | | Comparative example | | | | |
|---|---|---|---|---|---|---|---|---|---|
| | 1 | 2 | 3 | 4 | 1 | 2 | 3 | 4 | 5 |
| Compounding amount (parts by mass) | | | | | | | | | |
| NR | 30 | 30 | 30 | 30 | 50 | 50 | 50 | - | 50 |
| SBR1 | 50 | 50 | 50 | 50 | - | - | - | - | - |
| SBR2 | 10 | 10 | 10 | 10 | - | - | - | - | - |
| BR | 10 | 10 | 10 | 10 | 50 | 50 | 50 | 100 | 50 |
| Carbon black | 10 | 10 | 30 | 30 | 30 | 30 | 30 | 30 | 30 |
| Silica | 80 | 60 | 40 | 40 | 40 | 40 | 40 | 40 | 60 |
| Silane coupling agent | 6.4 | 4.8 | 3.2 | 3.2 | 3.2 | 3.2 | 3.2 | 3.2 | 4.8 |
| Oil | 20 | 10 | 10 | 10 | 10 | 10 | 10 | - | 10 |
| Resin component 1 | 20 | 20 | 20 | 20 | 20 | 20 | - | 20 | - |
| Resin component 2 | - | - | - | - | - | - | 20 | - | 20 |
| Wax | 2.0 | 2.0 | 2.0 | 2.0 | 2.0 | 2.0 | 2.0 | 2.0 | 2.0 |
| Stearic acid | 2.5 | 2.5 | 2.5 | 2.5 | 2.5 | 2.5 | 2.5 | 2.5 | 2.5 |
| Zinc oxide | 2.5 | 2.5 | 2.5 | 2.5 | 2.5 | 2.5 | 2.5 | 2.5 | 2.5 |
| Antioxidant 1 | 2.5 | 2.5 | 2.5 | 2.5 | 2.5 | 2.5 | 2.5 | 2.5 | 2.5 |
| Antioxidant 2 | 1.0 | 1.0 | 1.0 | 1.0 | 1.0 | 1.0 | 1.0 | 1.0 | 1.0 |
| Sulfur | 1.5 | 1.5 | 1.5 | 1.5 | 1.5 | 1.5 | 1.5 | 1.5 | 1.5 |
| Vulcanization accelerator 1 | 2.5 | 2.5 | 2.5 | 2.5 | 2.5 | 2.5 | 2.5 | 2.5 | 2.5 |
| Vulcanization accelerator 2 | 2.5 | 2.5 | 2.5 | 2.5 | 2.5 | 2.5 | 2.5 | 2.5 | 2.5 |
| Total styrene amount S (% by mass) | 12.4 | 12.4 | 12.4 | 12.4 | 0.36 | 0.36 | 0 | 0.36 | 0 |
| Groove depth H (mm) | 6.0 | 6.0 | 6.0 | 4.0 | 6.0 | 4.0 | 4.0 | 4.0 | 3.8 |
| H/S | 0.48 | 0.48 | 0.48 | 0.32 | 16.7 | 11.1 | - | 11.1 | - |
| $0°C \tan \delta$ | 0.47 | 0.45 | 0.48 | 0.48 | 0.47 | 0.47 | 0.48 | 0.43 | 0.48 |
| $0°C E_*$ (MPa) | 7.0 | 5.0 | 7.0 | 7.0 | 7.5 | 7.5 | 8.0 | 7.7 | 9.5 |
| $30°C \tan \delta$ | 0.21 | 0.18 | 0.21 | 0.21 | 0.25 | 0.25 | 0.25 | 0.25 | 0.28 |
| $30°C E_*$ (MPa) | 2.4 | 2.1 | 2.5 | 2.5 | 3.0 | 3.0 | 3.1 | 3.0 | 4.1 |
| $0°C \tan \delta / 0°C E^* \times 1000$ | 67.1 | 90.0 | 68.6 | 68.6 | 62.7 | 62.7 | 60.0 | 55.8 | 50.5 |
| $30°C \tan \delta \times 30°C E^* \times 100$ | 50.4 | 37.8 | 52.5 | 52.5 | 75.0 | 75.0 | 77.5 | 75.0 | 114.8 |
| $30°C E_*/H$ | 0.40 | 0.35 | 0.42 | 0.63 | 0.50 | 0.75 | 0.78 | 0.75 | 1.08 |
| Evaluation | | | | | | | | | |
| Fuel efficiency | 116 | 138 | 119 | 124 | 100 | 105 | 97 | 98 | 86 |
| Wet grip performance | 107 | 152 | 119 | 114 | 100 | 95 | 92 | 85 | 77 |
| Quietness performance | 126 | 141 | 119 | 119 | 100 | 100 | 97 | 102 | 73 |
| Overall performance | 349 | 431 | 357 | 357 | 300 | 300 | 286 | 285 | 236 |

REFERENCE SIGNS LIST

W. Tire width direction
C. Tire circumferential direction
CL. Tire equator
Iw. Tire width direction component of lateral groove
Ic. Tire circumferential direction component of lateral groove
Te. Tire ground-contacting end
L. Length of overlapping part of circumferential direction component of each of two or more lateral grooves
1. Tread part
2. Rib
3. Rib
4. Circumferential groove
5. Lateral groove
6. Lateral groove
7. Straight line obtained by connecting ends of lateral grooves on tread surface
8. Extension line of lowest part of lateral grooves in tire radial direction
9. Tread surface
H. Groove depth of two or more lateral grooves at deepest part

**Claims**

1. A tire comprising a tread part,

   the tread part comprising two or more ribs partitioned off by one or more circumferential grooves,
   wherein at least one rib of the ribs is provided with two or more lateral grooves,
   wherein a length of a width direction component of each of the two or more lateral grooves is 20% or more of a width of the rib,
   wherein, in the two or more lateral grooves, at least some of circumferential direction components of adjacent lateral grooves overlap each other,
   wherein the tread part is composed of a rubber composition comprising a rubber component and a plasticizing agent,
   wherein the rubber component comprises one or more selected from the group consisting of a styrene-butadiene rubber and an isoprene-based rubber,
   wherein the plasticizing agent comprises a copolymer resin comprising styrene and cyclopentadiene as monomer components, and
   wherein H/S is less than 5.0,
   where H represents a groove depth, in mm, at a deepest part of the two or more lateral grooves, and S represents a total styrene amount, in % by mass, in the rubber composition.

2. The tire of claim 1, wherein the tread part comprises two or more circumferential grooves, preferably three or more, and more preferably four or more.

3. The tire of claim 1 or 2,

   wherein the tread part comprises five ribs partitioned off by four circumferential grooves, and
   wherein at least some of the circumferential direction components of the adjacent lateral grooves overlap each other in any of the five ribs.

4. The tire of any one of claims 1 to 3, wherein the rubber composition comprises 50 parts by mass or more, preferably 55 parts by mass or more, more preferably 60 parts by mass or more of silica based on 100 parts by mass of the rubber component.

5. The tire of any one of claims 1 to 4, wherein $0°C \tan\delta / 0°C\, E_* \times 1000$ is greater than 65, preferably greater than 67, more preferably greater than 68, where $0°C \tan\delta$ represents a $\tan\delta$ at $0°$ of the rubber composition and $0°C\, E_*$ represents a complex elastic modulus, in MPa, at $0°C$ of the rubber composition.

6. The tire of any one of claims 1 to 5, wherein $30°C \tan\delta \times 30°C\, E_* \times 100$ is less than 60, preferably less than 58, more preferably less than 55, where $30°C \tan\delta$ represents a $\tan\delta$ at $30°$ of the rubber composition and $30°C\, E_*$ represents a complex elastic modulus, in MPa, at 30°C of the rubber composition.

7. The tire of any one of claims 1 to 6, wherein 30°C $E_*$ /H is 0.50 or less, preferably 0.48 or less, more preferably 0.45 or less, where 30°C $E_*$ represents a complex elastic modulus, in MPa, at 30°C of the rubber composition.

8. The tire of any one of claims 1 to 7, wherein a total length of overlapping parts of the circumferential direction components of the two or more lateral grooves relative to the tire entire circumference is 5.0% or more, preferably 6.0% or more, more preferably 8.0% or more.

9. The tire of any one of claims 1 to 8, wherein H/Sis less than 1.0, preferably less than 0.80, more preferably less than 0.60.

10. The tire of any one of claims 1 to 9, wherein the tire is for an SUV.

**Fig.1**

# Fig.2

Europäisches
Patentamt

European
Patent Office

Office européen
des brevets

# EUROPEAN SEARCH REPORT

**Application Number**

**EP 25 20 2563**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 389 459 A1 (SUMITOMO RUBBER IND [JP]) 26 June 2024 (2024-06-26) | 1-4,8-10 | INV. B60C1/00 |
| A | * paragraph [0053] - paragraph [0175]; figures 1-2 * | 5-7 | B60C11/00 B60C11/03 C08L9/06 |
| | ----- | | |
| X | EP 4 122 720 A1 (SUMITOMO RUBBER IND [JP]) 25 January 2023 (2023-01-25) | 1,2,4, 8-10 | |
| A | * paragraph [0054] - paragraph [0179]; figures 1-4; tables 1-3 * | 3,5-7 | |
| | ----- | | |
| X | US 2023/173842 A1 (KAWACHI TAKAHIRO [JP]) 8 June 2023 (2023-06-08) | 1,2,4, 8-10 | |
| A | * paragraph [0038] - paragraph [0162]; figure 1; tables 1,2 * | 3,5-7 | |
| | ----- | | |
| A | EP 4 067 114 A1 (SUMITOMO RUBBER IND [JP]) 5 October 2022 (2022-10-05) * paragraph [0064] - paragraph [0197]; figures 1-3; tables 1-5 * | 1-10 | |
| | ----- | | |
| A | EP 4 212 354 A1 (SUMITOMO RUBBER IND [JP]) 19 July 2023 (2023-07-19) * paragraph [0024] - paragraph [0146]; figures 1,3; tables 1-3 * | 1-10 | **TECHNICAL FIELDS SEARCHED (IPC)** B60C C09J C08L |
| | ----- | | |

The present search report has been drawn up for all claims

| Place of search | Date of completion of the search | Examiner |
|---|---|---|
| Munich | 21 January 2026 | Jung, Wolfgang |

EPO FORM 1503 03.82 (P04C01)

## ANNEX TO THE EUROPEAN SEARCH REPORT
## ON EUROPEAN PATENT APPLICATION NO.

EP 25 20 2563

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2026

| Patent document cited in search report | | Publication date | Patent family member(s) | | Publication date |
|---|---|---|---|---|---|
| EP 4389459 | A1 | 26-06-2024 | CN | 118219708 A | 21-06-2024 |
| | | | EP | 4389459 A1 | 26-06-2024 |
| | | | JP | 2024089361 A | 03-07-2024 |
| EP 4122720 | A1 | 25-01-2023 | EP | 4122720 A1 | 25-01-2023 |
| | | | JP | 7707710 B2 | 15-07-2025 |
| | | | JP | 2023014839 A | 31-01-2023 |
| US 2023173842 | A1 | 08-06-2023 | EP | 4186712 A1 | 31-05-2023 |
| | | | US | 2023173842 A1 | 08-06-2023 |
| EP 4067114 | A1 | 05-10-2022 | CN | 115195347 A | 18-10-2022 |
| | | | EP | 4067114 A1 | 05-10-2022 |
| | | | JP | 7647251 B2 | 18-03-2025 |
| | | | JP | 2022158223 A | 17-10-2022 |
| EP 4212354 | A1 | 19-07-2023 | CN | 116323248 A | 23-06-2023 |
| | | | EP | 4212354 A1 | 19-07-2023 |
| | | | JP | WO2022097454 A1 | 12-05-2022 |
| | | | WO | 2022097454 A1 | 12-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020041035 A
- JP 2009002594 A
- EP 3427975 A
- JP 6856781 B
- EP 3173251 A

**Non-patent literature cited in the description**

- *Akita Prefectural University Web Journal B*, 2019, vol. 6, 216-222
- *Rubber Chemistry and Technology*, 2012, vol. 85 (3), 408-449, 438, 440, 442
- A Comparison of Surface Morphology and Chemistry of Pyrolytic Carbon Blacks with Commercial Carbon Blacks. *Powder Technology*, 2005, vol. 160, 190-193